# EUROPEAN PATENT APPLICATION

(11) **EP 4 369 510 A1**
(43) Date of publication of application: **15.05.2024**
(21) Application number: 21965233.6
(22) Date of filing: 26.11.2021
(51) Int. Cl.: H01M 50/55, H01M 50/545, H01M 50/553, H01M 50/531

(54) **BATTERY CELL, BATTERY, ELECTRIC DEVICE, AND METHOD AND DEVICE FOR MANUFACTURING BATTERY CELL**

(71) Applicant: Contemporary Amperex Technology Co., Limited, Jiaocheng District Ningde Fujian 352100 (CN)
(72) Inventor: ZHU, Wenqi, Ningde, Fujian 352100 (CN)
(74) Representative: Ziebig Hengelhaupt Intellectual Property Attorneys Patentanwaltskanzlei PartGmbB
(86) International application number: PCT/CN2021/133705
(87) International publication number: WO 2023/092500

(57) **Abstract**

Some embodiments of this application provide a battery cell, a battery, an electrical device, and a method and equipment for manufacturing a battery cell, and relate to the technical field of batteries. The battery cell includes a housing, an electrode assembly, an end cap, and an electrode terminal. An opening is created on the housing. The electrode assembly is accommodated in the housing. The electrode assembly includes a body portion, a first tab, and a second tab. The first tab and the second tab are of opposite polarities and located on a same side of the body portion. The end cap is configured to fit and cover the opening and be electrically connected to the first tab. The electrode terminal is dielectrically connected to the end cap. The electrode terminal includes a first recess. The electrode terminal includes a first connecting portion. In a thickness direction of the end cap, the first connecting portion is located between the first recess and the second tab. The first connecting portion is configured to be connected to the second tab to implement electrical connection between the electrode terminal and the second tab. The battery cell of this structure leads out the tabs from the same side, thereby saving space inside the battery cell. In this way, the housing can provide more space for the body portion, thereby increasing the energy density of the battery cell.

## Description

### TECHNICAL FIELD

This application relates to the technical field of batteries, and in particular, to a battery cell, a battery, an electrical device, and a method and equipment for manufacturing a battery cell.

### BACKGROUND

Energy conservation and emission reduction are key to sustainable development of the automobile industry. Electric vehicles have become an important part of the sustainable development of the automobile industry by virtue of energy saving and environmental friendliness. Battery technology is crucial to development of electric vehicles.

In the battery technology, both safety and performance of a battery cell need to be considered. The energy density of the battery cell affects the performance of the battery. Therefore, how to increase the energy density of the battery cell is an urgent technical problem in the battery technology.

### SUMMARY

Some embodiments of this application provide a battery cell, a battery, an electrical device, and a method and equipment for manufacturing a battery cell to increase the energy density of the battery cell.

According to a first aspect, an embodiment of this application provides a battery cell, including: a housing, on which an opening is created; an electrode assembly, accommodated in the housing, where the electrode assembly includes a body portion, a first tab, and a second tab, and the first tab and the second tab are of opposite polarities and located on a same side of the body portion; an end cap, configured to fit and cover the opening and be electrically connected to the first tab; and an electrode terminal, dielectrically connected to the end cap. The electrode terminal includes a first recess. The first recess is recessed toward the body portion from a side of the electrode terminal, the side being away from the body portion. The electrode terminal includes a first connecting portion. In a thickness direction of the end cap, the first connecting portion is located between the first recess and the second tab. The first connecting portion is configured to be connected to the second tab to implement electrical connection between the electrode terminal and the second tab.

In the above technical solution, the electrode terminal includes a first recess. The first connecting portion of the electrode terminal is located between the first recess and the second tab and connected to the second tab, so as to implement a connection between the electrode terminal and the first tab. The second tab is electrically connected to the end cap, and the second tab and the first tab are located on the same side of the body portion, so that the tabs are led out from the same side of the body portion. In this way, some space inside the battery cell is saved, and the housing can provide more space for the body portion, thereby increasing the energy density of the battery cell.

In some embodiments, the electrode terminal includes an abutment face oriented toward the body portion in the thickness direction. The abutment face is configured to abut against the second tab. The electrode terminal forms the first connecting portion between a bottom face of the first recess and the abutment face.

In the above technical solution, the abutment face of the electrode terminal abuts against the second tab. On the one hand, a relatively large flow area is ensured between the electrode terminal and the second tab. On the other hand, a direct connection is implemented between the electrode terminal and the second tab, and the electrical connection between the electrode terminal and the second tab is implemented without a need for a current collection component, thereby vacating more space for the body portion and increasing the energy density of the battery cell.

In some embodiments, the end cap includes an inner surface oriented toward the body portion in the thickness direction, and the abutment face is flush with the inner surface.

In the above technical solution, the abutment face of the electrode terminal is flush with the inner surface of the end cap, thereby reducing the space occupied by the electrode terminal in the housing, vacating more space for the body portion, and in turn, increasing the energy density of the battery cell.

In some embodiments, an injection port is created on the first connecting portion. The injection port communicates with the first recess and an interior of the housing.

In the above technical solution, an injection port is created on the first connecting portion. An electrolytic solution can be injected into the housing through the injection port, without a need to provide an injection port on the end cap, thereby increasing the strength of the end cap. In addition, the first connecting portion is formed after the first recess is created on the electrode terminal, and the first connecting portion is relatively small in thickness, thereby facilitating arrangement of the injection port. In some embodiments, the electrode terminal includes: a terminal body, where the first connecting portion is formed on the terminal body; and a limiting structure, disposed on the terminal body, and configured to limit movement of the terminal body relative to the end cap in the thickness direction.

In the above technical solution, the limiting structure serves to limit the position of the terminal body, and restricts the movement of the terminal body relative to the end cap in the thickness direction of the end cap, thereby improving the firmness of the connection between the electrode terminal and the end cap, ensuring stability of the electrical connection between the first connecting portion and the tab, and reducing the risk of failure of the electrical connection between the first connecting portion and the second tab caused by the movement of the electrode terminal relative to the end cap.

In some embodiments, the limiting structure includes a first limiting portion and a second limiting portion. Both the first limiting portion and the second limiting portion protrude from an outer peripheral surface of the terminal body. The end cap includes a stop portion. Athrough-hole is created on the stop portion. The terminal body is passed through and disposed in the through-hole. In the thickness direction, the first limiting portion and the second limiting portion are located on two sides of the stop portion respectively to limit movement of the terminal body relative to the stop portion in the thickness direction.

In the above technical solution, the terminal body is passed through and disposed in the through-hole of the stop portion. The first limiting portion and the second limiting portion are located on two sides of the stop portion respectively, thereby not only restricting the movement of the terminal body in the axial direction (the thickness direction of the end cap), but also restricting the movement of the terminal body in the radial direction, and in turn, implementing the position limitation for the electrode terminal, and ensuring the stability of the electrical connection between the first connecting portion of the electrode terminal and the tab.

In some embodiments, the battery cell further includes: an insulator, where at least a part of the insulator is located between the first tab and the second tab to isolate the first tab from the second tab.

In the above technical solution, at least a part of the insulator is located between the first tab and the second tab. The insulator serves to isolate the first tab from the second tab, thereby reducing the risk of a short circuit caused by the contact between the first tab and the second tab. The insulator can also reduce the movement space of the body portion in the housing, and reduce the risk of failure of the electrical connection between the end cap and the first tab as well as the electrical connection between the first connecting portion and the second tab.

In some embodiments, the insulator includes: a first insulating portion, where at least a part of the first insulating portion is located between the first tab and the second tab to isolate the first tab from the second tab; and a second insulating portion, where at least a part of the second insulating portion is located between the electrode terminal and the end cap to isolate the electrode terminal from the end cap and implement insulated connection between the electrode terminal and the end cap.

In the above technical solution, the first insulating portion of the insulator serves to isolate the first tab from the second tab, and the second insulating portion of the insulator serves to isolate the electrode terminal from the end cap. In other words, the insulator not only serves to isolate the first tab from the second tab, but also serves to isolate the electrode terminal from the end cap. The insulator implements the insulation between the electrode terminal and the end cap when implementing the insulation between the first tab and the second tab.

In some embodiments, the first insulating portion and the second insulating portion are a structure formed in one piece. In this way, the insulator is highly integrated and easy to mount. In addition, because the electrode terminal is dielectrically connected to the end cap by the second insulating portion, when the position of the second insulating portion is limited by both the electrode terminal and the end cap, the first insulating portion is not prone to be displaced in the housing. In this way, the first insulating portion is always in the position for isolating the first tab from the second tab.

In some embodiments, in the thickness direction, the first insulating portion abuts against the end cap and the body portion.

In the above technical solution, the first insulating portion abuts against the end cap and the body portion in the thickness direction of the end cap, and the first insulating portion not only isolates the first tab from the second tab, but also properly limits the position of the body portion to restrict the body portion from moving in the housing along the thickness direction of the end cap. This further reduces the risk of failure of the electrical connection between the end cap and the first tab as well as the electrical connection between the first connecting portion and the second tab.

In some embodiments, the first tab is located on an outer peripheral side of the second tab, and an inner peripheral surface of the first tab is in clearance fit with an outer peripheral surface of the second tab.

In the above technical solution, the first tab is located on the outer peripheral side of the second tab, the first tab is connected to the end cap, and the first connecting portion of the electrode terminal is connected to the second tab. Therefore, the electrode terminal can be mounted in a middle position of the end cap, thereby facilitating the connection between the electrode terminal and an external component.

In some embodiments, the first tab and/or the second tab assume a ring structure.

In the above technical solution, the first tab assumes a ring structure, thereby facilitating formation of the first tab and implementation of a large-area flow of current between the first tab and the end cap. The second tab assumes a ring structure, thereby facilitating formation of the second tab and implementation of a large-area flow of current between the second tab and the electrode terminal.

In some embodiments, the end cap includes a second recess. The second recess is recessed toward the body portion from a side of the end cap, the side being away from the body portion. The end cap includes a second connecting portion. In the thickness direction of the end cap, the second connecting portion is located between the second recess and the first tab. The second connecting portion is configured to be connected to the first tab.

In the above technical solution, the end cap is located between the second recess and the first tab to form a second connecting portion connected to the first tab. A part of the end cap, located at the bottom of the second recess, is the second connecting portion. Through the second recess, the connection region between the end cap and the first tab can be determined, thereby making it convenient to connect the end cap to the first tab accurately.

In some embodiments, the first connecting portion is welded to the second tab; and/or the end cap is welded to the first tab.

In the above technical solution, the first connecting portion is welded to the second tab, thereby implementing a stable connection between the electrode terminal and the first tab and ensuring a stable flow of current between the electrode terminal and the second tab. At the same time, the direct connection between the electrode terminal and the second tab is implemented. The electrical connection between the electrode terminal and the second tab can be implemented without requiring a current collection component, thereby vacating more space for the body portion.

The end cap is welded to the first tab, thereby implementing a stable connection between the end cap and the first tab and ensuring a stable flow of current between the end cap and the first tab. At the same time, the direct connection between the end cap and the first tab is implemented. The electrical connection between the end cap and the first tab can be implemented without requiring a current collection component, thereby vacating more space for the body portion.

According to a second aspect, an embodiment of this application provides a battery. The battery includes: the battery cell according to any one of the embodiments in the first aspect; and a box, configured to accommodate the battery cell.

According to a third aspect, an embodiment of this application provides an electrical device. The electrical device includes the battery according to any one of the embodiments in the second aspect.

According to a fourth aspect, an embodiment of this application provides a method for manufacturing a battery cell. The manufacturing method includes: providing a housing, where an opening is created on the housing; providing an electrode assembly, where the electrode assembly includes a body portion, a first tab, and a second tab; and the first tab and the second tab are of opposite polarities and located on a same side of the body portion; providing an end cap and an electrode terminal, where the electrode terminal is dielectrically connected to the end cap, the electrode terminal includes a first recess, and the electrode terminal includes a first connecting portion; letting the electrode assembly be accommodated in the housing; letting the end cap fit and cover the opening, so that the first recess is recessed toward the body portion from a side of the electrode terminal, the side being away from the body portion, and so that the first connecting portion is located between the first recess and the second tab; connecting the end cap to the first tab to implement electrical connection between the end cap and the first tab; and connecting the first connecting portion to the second tab to implement electrical connection between the electrode terminal and the second tab.

According to a fifth aspect, an embodiment of this application further provides a piece of equipment for manufacturing a battery cell. The manufacturing equipment includes: a first providing apparatus, configured to provide a housing, where an opening is created on the housing; a second providing apparatus, configured to provide an electrode assembly, where the electrode assembly includes a body portion, a first tab, and a second tab, and the first tab and the second tab are of opposite polarities and located on a same side of the body portion; a third providing apparatus, configured to provide an end cap and an electrode terminal, where the electrode terminal is dielectrically connected to the end cap, the electrode terminal includes a first recess, and the electrode terminal includes a first connecting portion; and an assembling apparatus. The assembling apparatus is configured to: let the electrode assembly be accommodated in the housing; let the end cap fit and cover the opening, so that the first recess is recessed toward the body portion from a side of the electrode terminal, the side being away from the body portion, and so that the first connecting portion is located between the first recess and the second tab; connect the end cap to the first tab to implement electrical connection between the end cap and the first tab; and connect the first connecting portion to the second tab to implement electrical connection between the electrode terminal and the second tab.

### BRIEF DESCRIPTION OF DRAWINGS

To describe technical solutions in embodiments of this application more clearly, the following outlines the drawings to be used in the embodiments. Understandably, the following drawings show merely some embodiments of this application, and therefore, are not intended to limit the scope. A person of ordinary skill in the art may derive other related drawings from the drawings without making any creative efforts.
FIG. 1 is a schematic structural diagram of a vehicle according to some embodiments of this application;
FIG. 2 is a schematic structural diagram of a battery according to some embodiments of this application;
FIG. 3 is an exploded view of a battery cell according to some embodiments of this application;
FIG. 4 is a cross-sectional view of the battery cell shown in FIG. 3;
FIG. 5 is a partial view of the battery cell shown in FIG. 4;
FIG 6 is a close-up view of a part A in the battery cell shown in FIG. 4;
FIG. 7 is a flowchart of a method for manufacturing a battery cell according to some embodiments of this application; and
FIG. 8 is a schematic structural diagram of equipment for manufacturing a battery cell according to some embodiments of this application.

List of reference numerals: 10-box; 11-first part; 12-second part; 20-battery cell; 21-housing; 22-electrode assembly; 221-body portion; 222-first tab; 223-second tab; 23-end cap; 231-inner surface; 232-stop portion; 233-second recess; 234-second connecting portion; 24-electrode terminal; 241-first recess; 2411-bottom face; 242-first connecting portion; 243-abutment face; 244-injection port; 245-terminal body; 246-first limiting portion; 247-second limiting portion; 25-insulator; 251-first insulating portion; 2511-first side; 2512-second side; 252-second insulating portion; 100-battery; 200-controller; 300-motor; 1000-vehicle; 2000-manufacturing equipment; 2100-first providing apparatus; 2200-second providing apparatus; 2300-third providing apparatus; 2400-assembling apparatus; Z-thickness direction.

### DETAILED DESCRIPTION OF EMBODIMENTS

To make the objectives, technical solutions, and advantages of the embodiments of this application clearer, the following gives a clear description of the technical solutions in some embodiments of this application with reference to the drawings in some embodiments of this application. Evidently, the described embodiments are merely a part rather than all of the embodiments of this application. All other embodiments derived by a person of ordinary skill in the art based on the embodiments of this application without making any creative efforts still fall within the protection scope of this application.

Unless otherwise defined, all technical and scientific terms used herein have the same meanings as what is normally understood by a person skilled in the technical field of this application. The terms used in the specification of this application are merely intended to describe specific embodiments but not intended to limit this application. The terms "include" and "contain" and any variations thereof used in the specification, claims, and brief description of drawings of this application are intended as non-exclusive inclusion. The terms such as "first" and "second" used in the specification, claims, and brief description of drawings herein are intended to distinguish between different items, but are not intended to describe a specific sequence or order of precedence.

Reference to "embodiment" in this application means that a specific feature, structure or characteristic described with reference to the embodiment may be included in at least one embodiment of this application. Reference to this term in different places in the specification does not necessarily represent the same embodiment, nor does it represent an independent or alternative embodiment in a mutually exclusive relationship with other embodiments.

In the description of this application, unless otherwise expressly specified and defined, the terms "mount", "concatenate", "connect", and "attach" are understood in a broad sense. For example, a "connection" may be a fixed connection, a detachable connection, or an integrated connection; or may be a direct connection or an indirect connection implemented through an intermediary; or may be internal communication between two components. A person of ordinary skill in the art is able to understand the specific meanings of the terms in this application according to specific situations.

The term "and/or" in this application indicates merely a relation for describing the related items, and represents three possible relationships. For example, "A and/or B" may represent the following three circumstances: A alone, both A and B, and B alone. In addition, the character "/" herein generally indicates an "or" relationship between the item preceding the character and the item following the character.

In embodiments of this application, the same reference numeral denotes the same component. For brevity, detailed descriptions of the same component are omitted in a different embodiment. Understandably, dimensions such as thickness, length, and width of various components in the embodiments of this application shown in the drawings, and dimensions such as overall thickness, length, and width of an integrated device are merely illustrative descriptions, but do not constitute any limitation on this application.

"A plurality of referred to in this application means two or more (including two).

In this application, a battery cell may include a lithium-ion secondary battery, a lithium-ion primary battery, a lithium-sulfur battery, a sodium-lithium-ion battery, a sodium-ion battery, a magnesium-ion battery, or the like, without being limited in embodiments of this application. The battery cell may be in various shapes such as a cylinder, flat body, or cuboid, without being limited in embodiments of this application. Depending on the form of packaging, the battery cell is typically classed into three types: cylindrical battery cell, prismatic battery cell, and pouch-type battery cell. The embodiments of this application do not limit the type of the battery cell.

The battery mentioned in embodiments of this application means a unitary physical module that includes one or more battery cells to provide a higher voltage and a higher capacity. For example, the battery mentioned in this application may include a battery module, a battery pack, or the like. A battery typically includes a box configured to package one or more battery cells. The box prevents liquid or other foreign matters from affecting the charging or discharging of the battery cells.

A battery cell includes an electrode assembly and an electrolytic solution. The electrode assembly includes a positive electrode plate, a negative electrode plate, and a separator. The battery cell works primarily by shuttling metal ions between the positive electrode plate and the negative electrode plate. The positive electrode plate includes a positive current collector and a positive active material layer. A surface of the positive current collector is coated with the positive active material layer. Of the positive current collector, a part uncoated with the positive active material layer protrudes from a part coated with the positive active material layer. The part, uncoated with the positive active material layer, of the positive current collector, serves as a positive tab. Using a lithium-ion battery as an example, the positive current collector may be made of aluminum, and a positive active material may be lithium cobalt oxide, lithium iron phosphate, ternary lithium, lithium manganese oxide, or the like. The negative electrode plate includes a negative current collector and a negative active material layer. A surface of the negative current collector is coated with the negative active material layer. Of the negative current collector, a part uncoated with the negative active material layer protrudes from a part coated with the negative active material layer, and the part uncoated with the negative active material layer serves as a negative tab. The negative current collector may be made of copper, and a negative active material may be carbon, silicon, or the like. In order to ensure passage of a large current without fusing off, the positive tab is plural in number, and the plurality of positive tabs are stacked together; the negative tab is plural in number, and the plurality of negative tabs are stacked together. The separator may be made of a material such as PP (polypropylene, polypropylene) or PE (polyethylene, polyethylene). In addition, the electrode assembly may be of a jelly-roll type structure or a stacked type structure, without being limited herein.

A battery cell typically includes a housing, an electrode assembly, and an end cap. The electrode assembly is located in the housing. The end cap fits and covers the housing to provide an airtight space for the electrode assembly and an electrolytic solution. The battery cell generates electrical energy by shuttling metal ions (such as lithium ions) between a positive electrode plate and a negative electrode plate of the electrode assembly.

The battery cell typically includes two output electrodes of opposite polarities to output the electrical energy of the battery cell. Currently, the housing and the electrode terminal disposed on the end cap are used as two output electrodes of the battery cell respectively. The two tabs of opposite polarities of the electrode assembly are electrically connected to the housing and the tab respectively. The inventor finds that, when the two tabs of opposite polarities of the electrode assembly are located at two ends of the body portion of the electrode assembly respectively, one tab is electrically connected to the electrode terminal, and the other tab is electrically connected to an end of the housing opposite to the end cap. Both tabs occupy a part of space inside the housing, thereby reducing the space available to the body portion of the electrode assembly inside the housing, and reducing the energy density of the battery cell.

In view of this, an embodiment of this application provides a battery cell. The battery cell includes a housing, an electrode assembly, an end cap, and an electrode terminal. An opening is created on the housing. The electrode assembly is accommodated in the housing. The electrode assembly includes a body portion, a first tab, and a second tab. The first tab and the second tab are of opposite polarities and located on a same side of the body portion. The end cap is configured to fit and cover the opening and be electrically connected to the first tab. an electrode terminal, dielectrically connected to the end cap, where the electrode terminal includes a first recess; the first recess is recessed toward the body portion from a side of the electrode terminal, the side being away from the body portion; the electrode terminal includes a first connecting portion; in a thickness direction of the end cap, the first connecting portion is located between the first recess and the second tab; and the first connecting portion is configured to be connected to the second tab to implement electrical connection between the electrode terminal and the second tab.

In such a battery cell, the electrode terminal includes a first recess. The first connecting portion of the electrode terminal is located between the first recess and the second tab and connected to the second tab, so as to implement a connection between the electrode terminal and the first tab. The second tab is electrically connected to the end cap, and the second tab and the first tab are located on the same side of the body portion, so that the tabs are led out from the same side of the body portion. In this way, some space inside the battery cell is saved, and the housing can provide more space for the body portion, thereby increasing the energy density of the battery cell.

The technical solutions described in this embodiment of this application are applicable to a battery and an electrical device that uses the battery.

The electrical device may be a vehicle, a mobile phone, a portable device, a notebook computer, a ship, a spacecraft, an electric toy, a power tool, or the like. The vehicle may be an oil-fueled vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, such as a game console, an electric car toy, an electric ship toy, an electric airplane toy, and the like. The power tool includes an electrical metal cutting tool, an electrical grinding tool, an electrical assembling tool, and a power tool for use in railways. Examples of the power tool are an electrical drill, an electrical grinder, an electrical wrench, an electrical screwdriver, an electrical hammer, an electrical impact drill, a concrete vibrator, an electrical planer, and the like. The electrical device is not particularly limited in this embodiment of this application.

For ease of description in the following embodiments, a vehicle is used as an example of the electrical device.

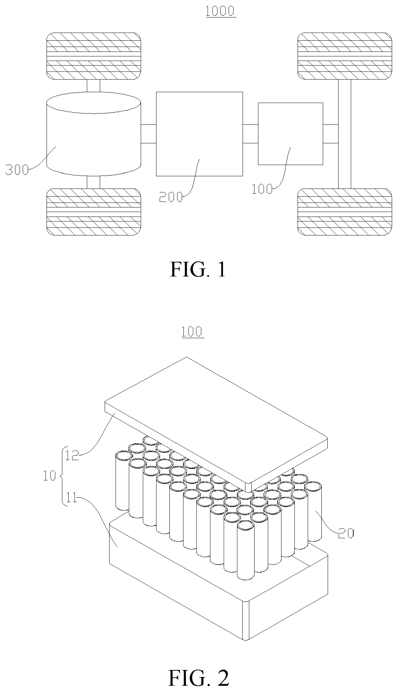

Referring to FIG. 1, FIG. 1 is a schematic structural diagram of a vehicle 1000 according to some embodiments of this application. A battery 100 is disposed inside the vehicle 1000. The battery 100 may be disposed at the bottom, front, or rear of the vehicle 1000. The battery 100 may be configured to supply power to the vehicle 1000. For example, the battery 100 may serve as an operating power supply of the vehicle 1000.

The vehicle 1000 may further include a controller 200 and a motor 300. The controller 200 is configured to control the battery 100 to supply power to the motor 300, for example, to meet electrical energy requirements in starting, navigating, or running the vehicle 1000.

In some embodiments of this application, the battery 100 serves not only as an operating power supply of the vehicle 1000, but may also serve as a drive power supply of the vehicle 1000 to provide a driving power supply for the vehicle 1000 in place of or partly in place of fuel oil or natural gas.

Referring to FIG. 2, FIG. 2 is a schematic structural diagram of a battery 100 according to some embodiments of this application. The battery 100 includes a box 10 and a battery cell 20. The box 10 is configured to accommodate the battery cell 20.

The box 10 is a component configured to accommodate the battery cell 20. The box 10 provides an accommodation space for the battery cell 20. The box 10 may be in various structures. In some embodiments, the box 10 may include a first part 11 and a second part 12. The first part 11 and the second part 12 fit and cover each other to define the accommodation space configured to accommodate the battery cell 20. The first part 11 and the second part 12 may be in various shapes, such as a cuboid or cylinder. The first part 11 may be a hollow structure opened up at one side. The second part 12 may also be a hollow structure opened up at one side. The open-up side of the second part 12 fits and covers the open-up side of the first part 11 to form the box 10 that provides the accommodation space. Alternatively, the first part 11 is a hollow structure opened up at one side, and the second part 12 is a plate-shaped structure. The second part 12 fits and covers the open-up side of the first part 11 to form the box 10 that provides the accommodation space. Airtightness between the first part 11 and the second part 12 may be implemented by a sealing element. The sealing element may be a sealing ring, a sealant, or the like.

There may be one or more battery cells 20 in the battery 100. If there are a plurality of battery cells 20, the plurality of battery cells 20 may be connected in series, parallel, or series-and-parallel pattern. The series-and-parallel pattern means a combination of series connection and parallel connection of the plurality of battery cells 20. The plurality of battery cells 20 are connected in series, parallel, or series-and-parallel pattern to form a battery module first, and then a plurality of battery modules are connected in series, parallel, or series-and-parallel pattern to form an entirety that is to be accommodated in the box 10. Alternatively, all battery cells 20 are directly connected in series, parallel, or series-and-parallel pattern, and then the entirety of all battery cells 20 is accommodated in the box 10.

In some embodiments, the battery 100 may further include a busbar component. The plurality of battery cells 20 may be electrically connected by the busbar component, so as to implement series, parallel, or series-and-parallel connection between the plurality of battery cells 20. The busbar component may be a metal conductor, such as copper, iron, aluminum, stainless steel, or an aluminum alloy.

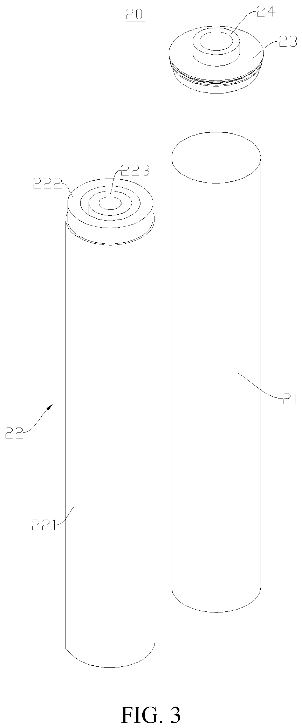

Referring to FIG. 3, FIG. 3 is an exploded view of a battery cell 20 according to some embodiments of this application. The battery cell 20 may include a housing 21, an electrode assembly 22, an end cap 23, and an electrode terminal 24.

The housing 21 is a component configured to accommodate the electrode assembly 22. The housing 21 may be a hollow structure opened at one end, or, the housing 21 may be a hollow structure opened at two ends. The housing 21 may be made of a variety of materials such as copper, iron, aluminum, steel, or an aluminum alloy. The housing 21 may be in various shapes such as a cylinder or cuboid. As an example, in FIG. 3, the housing 21 is cylindrical.

The electrode assembly 22 is a component that reacts electrochemically in the battery cell 20. The electrode assembly 22 may include a body portion 221, and a first tab 222 and a second tab 223 that are of opposite polarities. Both the first tab 222 and the second tab 223 protrude from the body portion 221. The first tab 222 and the second tab 223 may be disposed on the same side of the body portion 221. Of the first tab 222 and the second tab 223, one is a positive tab, the other is a negative tab. The body portion 221 may include a positive electrode plate, a negative electrode plate, and a separator. The body portion 221 may be a jelly-roll structure formed by winding the positive electrode plate, the separator, and the negative electrode plate. Alternatively, the body portion 221 may be a stacked structure formed by stacking the positive electrode plate, the separator, and the negative electrode plate. The body portion 221 may be a part of the electrode assembly 22, the part corresponds to a region of the electrode plates, and the region is coated with an active material layer. The positive tab may be a part coated with no active material layer on the positive electrode plate, and the negative tab may be a part coated with no active material layer on the negative electrode plate.

The end cap 23 is a component that fits and covers the opening of the housing 21 to isolate the internal environment of the battery cell 20 from the external environment. The end cap 23 fits and covers the opening of the housing 21. The end cap 23 and the housing 21 jointly define a sealed space configured to accommodate the electrode assembly 22 and the electrolytic solution. The end cap 23 may be hermetically connected to the housing 21 through a sealing element. The shape of the end cap 23 may fit the shape of the housing 21. For example, the housing 21 is a cuboidal structure, and the end cap 23 is a rectangular plate-shaped structure that fits the housing 21. For another example, the housing 21 is a cylindrical structure, and the end cap 23 is a circular plate-shaped structure that fits the housing 21. The end cap 23 may be made of various materials. As an example, the end cap 23 may be made of a metal material such as copper, iron, aluminum, steel, or an aluminum alloy.

There may be one or two end caps 23 in the battery cell 20. If the housing 21 is a hollow structure opened at one end, one end cap 23 is disposed. If the housing 21 is a hollow structure opened at both ends, two end caps 23 are disposed. The two end caps 23 fit and cover the two openings of the housing 21 respectively.

The electrode terminal 24 is a component configured to connect the battery cell 20 to an external component (such as a busbar component) to output electrical energy. In an embodiment in which the first tab 222 and the second tab 223 are disposed on the same side of the body portion 221, the end cap 23 may be electrically connected to the first tab 222, and the electrode terminal 24 disposed on the end cap 23 may be electrically connected to the second tab 223. In this way, the end cap 23 and the electrode terminal 24 on the same side of the housing 21 serve as output electrodes of opposite polarities of the battery cell 20. In this case, the end cap 23 and the first tab 222 can be dielectrically connected to reduce the risk of a short circuit between the positive electrode and the negative electrode. It is hereby noted that, in an embodiment in which there are two end caps 23 in the battery cell 20, the electrode terminal 24 may be disposed on one end cap 23, but without disposing the electrode terminal 24 on the other end cap 23.

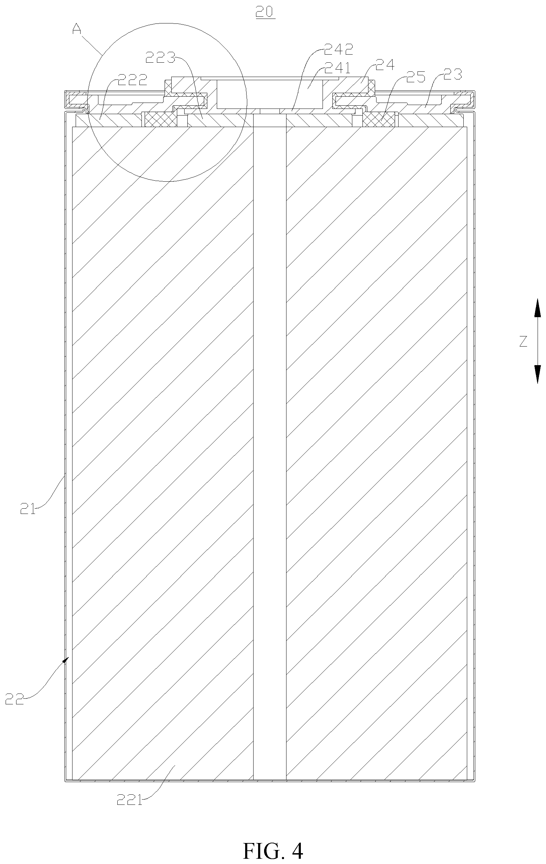

Referring to FIG. 4, FIG. 4 is a cross-sectional view of the battery cell 20 shown in FIG. 3. An embodiment of this application provides a battery cell 20. The battery cell 20 includes a housing 21, an electrode assembly 22, an end cap 23, and an electrode terminal 24. An opening is created on the housing 21. The electrode assembly 22 is accommodated in the housing 21. The electrode assembly 22 includes a body portion 221, a first tab 222, and a second tab 223. The first tab 222 and the second tab 223 are of opposite polarities and located on the same side of the body portion 221. The end cap 23 is configured to fit and cover the opening and be electrically connected to the first tab 222. The electrode terminal 24 is dielectrically connected to the end cap 23. The electrode terminal 24 includes a first recess 241. The first recess 241 is recessed toward the body portion 221 from a side of the electrode terminal 24, the side being away from the body portion 221. The electrode terminal 24 includes a first connecting portion 242. In a thickness direction Z of the end cap 23, the first connecting portion 242 is located between the first recess 241 and the second tab 223. The first connecting portion 242 is configured to be connected to the second tab 223 to implement electrical connection between the electrode terminal 24 and the second tab 223.

The first tab 222 and the second tab 223 are of opposite polarities. The first tab 222 is a positive tab, and the second tab 223 is a negative tab; or, the first tab 222 is a negative tab, and the second tab 223 is a positive tab. In the thickness direction Z of the end cap 23, the first tab 222 and the second tab 223 protrude from the same end of the body portion 221. The first tab 222 and the second tab 223 each may be a closed structure extending along the circumferential direction of the housing 21. The first tab 222 is located on the outer circumferential side of the second tab 223, or the second tab 223 is located on the outer circumferential side of the first tab 222. For example, the first tab 222 and the second tab 223 assume a ring structure, and the first tab 222 is located on the outer circumferential side of the second tab 223, so that the first tab 222 and the second tab 223 are arranged as a large ring and a small ring respectively. Alternatively, the first tab 222 and the second tab 223 may be strip-shaped, and the first tab 222 and the second tab 223 are spaced out on the same side of the body portion 221.

The dielectrical connection or insulated connection between the electrode terminal 24 and the end cap 23 means that the electrode terminal is insulated from the end cap 23 after being connected to the end cap, without allowing a charge to move from one to the other. That the end cap 23 is electrically connected to the first tab 222 means that the end cap 23 and the first tab 222 are connected so that a charge can move from one to the other. The end cap 23 may be directly connected to the first tab 222 to implement electrical connection in between. For example, the end cap 23 abuts on or is welded to the first tab 222. Alternatively, the end cap 23 may be indirectly connected to the first tab 222 to implement electrical connection in between. For example, the end cap 23 is connected to the first tab 222 by a current collection component or conductive tape. That the electrode terminal 24 is electrically connected to the second tab 223 means that the electrode terminal 24 and the second tab 223 are connected so that a charge can move from one to the other. The first connecting portion 242 may be directly connected to the second tab 223. For example, the first connecting portion 242 abuts on or is welded to the second tab 223. Alternatively, the first connecting portion 242 is indirectly connected to the second tab 223. For example, the first connecting portion 242 is connected to the second tab 223 by a current collection component or conductive tape. The current collection component referred to herein is a conductor capable of conducting an electrical current, and may be a disc-shaped current collection disc or a sheet-shaped current collection plate.

The first recess 241 on the electrode terminal 24 may be a groove that is recessed toward the body portion 221 from an end of the electrode terminal 24, the end being away from the body portion 221. A depth direction of the first recess 241 is consistent with the thickness direction Z of the end cap 23. The first recess 241 may assume a straight groove structure that keeps a constant dimension in a direction perpendicular to the depth direction along the depth direction. For example, the first recess 241 is a cylindrical groove. Alternatively, the first recess 241 may assume a stepped structure that tapers the dimension in the direction perpendicular to the depth direction along the depth direction. For example, the first recess 241 is a stepped groove that tapers from top to bottom.

The first connecting portion 242 is a part that connects the electrode terminal 24 and the second tab 223. A part of the electrode terminal 24, located at the bottom of the first recess 241, is the first connecting portion 242. In other words, after the first recess 241 is created on the electrode terminal 24, a remaining part other than the position occupied by the first recess 241 on the electrode terminal 24 is the first connecting portion 242.

As an example, the housing 21 is cylindrical and opened at one end, the end cap 23 is circular, and the electrode terminal 24 is disposed at the center of the end cap 23.

In this embodiment of this application, the electrode terminal 24 includes a first recess 241. The first connecting portion 242 of the electrode terminal 24 is located between the first recess 241 and the second tab 223 and connected to the second tab 223, so as to implement a connection between the electrode terminal 24 and the first tab 222. The second tab 223 is electrically connected to the end cap 23, and the second tab 223 and the first tab 222 are located on the same side of the body portion 221, so that the tabs are led out from the same side of the body portion 221. In this way, some space inside the battery cell 20 is saved, and the housing 21 can provide more space for the body portion 221, thereby increasing the energy density of the battery cell 20.

In addition, the electrode terminal 24 is located between the first recess 241 and the second tab 223 to form a first connecting portion 242. A part of the electrode terminal 24, located at the bottom of the first recess 241, is the first connecting portion 242. Through the first recess 241, the connection region between the electrode terminal 24 and the second tab 223 can be determined, thereby making it convenient to connect the electrode terminal 24 to the second tab 223 accurately.

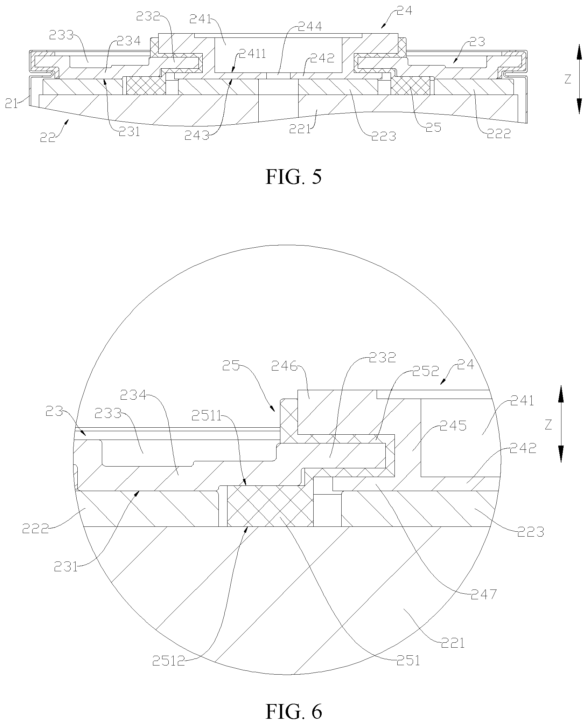

In some embodiments, referring to FIG. 5, FIG. 5 is a partial view of the battery cell 20 shown in FIG. 4. The electrode terminal 24 includes an abutment face 243 oriented toward the body portion 221 in the thickness direction Z of the end cap 23. The abutment face 243 is configured to abut against the second tab 223. The electrode terminal 24 forms the first connecting portion 242 between a bottom face 2411 of the first recess 241 and the abutment face 243.

The abutment face 243 is a surface of the electrode terminal 24, and the surface is oriented toward the body portion 221 and abuts against the second tab 223 in the thickness direction Z of the end cap 23. The abutment face 243 may be an end face of the electrode terminal 24, the end face being oriented toward the body portion 221. The abutment face 243 is configured to abut against an end of the second tab 223, the end being away from the body portion 221. That the abutment face 243 abuts against the second tab 223 means that the abutment face 243 keeps in contact with the second tab 223. The electrical connection between the first connecting portion 242 and the second tab 223 may be implemented by the abutment between the abutting face 243 and the second tab 223. Alternatively, when the abutment face 243 abuts against the second tab 223, the first connecting portion 242 and the second tab 223 are fixed together. For example, the first connecting portion 242 is welded to the second tab 223.

The bottom face 2411 of the first recess 241 means a face of the first recess 241, and the face is closest to the body portion 221 in the thickness direction Z of the end cap 23. The first connecting portion 242 is a part of the electrode terminal 24, and the part is located between the abutment face 243 and the bottom face 2411 of the first recess 241. The abutment face 243 and the bottom face 2411 of the first recess 241 are two surfaces of the first connecting portion 242 in the thickness direction Z of the end cap 23 respectively.

In this embodiment, the abutment face 243 of the electrode terminal 24 abuts against the second tab 223. On the one hand, a relatively large flow area is ensured between the electrode terminal 24 and the second tab 223. On the other hand, a direct connection is implemented between the electrode terminal 24 and the second tab 223, and the electrical connection between the electrode terminal 24 and the second tab 223 is implemented without a need for a current collection component, thereby vacating more space for the body portion 221 and increasing the energy density of the battery cell 20.

In some embodiments, still referring to FIG. 5, the end cap 23 includes an inner surface 231 oriented toward the body portion 221 in the thickness direction Z, and the abutment face 243 is flush with the inner surface 231.

The inner surface 231 is a surface of the end cap 23, and the surface is oriented toward the body portion 221 and closest to the body portion 221 in the thickness direction Z. That the abutment face 243 is flush with the inner surface 231 means that the abutment face 243 is coplanar with the inner surface 231.

In this embodiment, the abutment face 243 of the electrode terminal 24 is flush with the inner surface 231 of the end cap 23, thereby reducing the space occupied by the electrode terminal 24 in the housing 21, vacating more space for the body portion 221, and in turn, increasing the energy density of the battery cell 20.

In other embodiments, the abutment face 243 may be closer to the body portion 221 than the inner surface 231 in the thickness direction Z of the end cap 23, or the abutment face 243 may be farther away from the body portion 221 than the inner surface 231 in the thickness direction Z of the end cap 23.

In some embodiments, still referring to FIG. 5, an injection port 244 is created on the first connecting portion 242. The injection port 244 communicates with the first recess 241 and an interior of the housing 21.

The injection port 244 is a channel for injecting an electrolytic solution into the housing 21. The injection port 244 runs through the bottom face 2411 of the first recess 241 and the abutment face 243 of the electrode terminal 24, thereby communicating the first recess 241 to the interior of the housing 21. The injection port 244 occupies a part of the bottom face 2411 of the first recess 241. As an example, the injection port 244 is located at the center of the bottom face 2411 of the first recess 241, and the injection port 244 is opposite to a center hole of the electrode assembly 22. The injection port 244 may be in various shapes such as a circular or square hole.

The electrolytic solution can be injected into the housing 21 through the injection port 244, without a need to provide an injection port 244 on the end cap 23, thereby increasing the strength of the end cap 23. In addition, the first connecting portion 242 is formed after the first recess 241 is created on the electrode terminal 24, and the first connecting portion 242 is relatively small in thickness, thereby facilitating arrangement of the injection port 244.

In some embodiments, referring to FIG. 6, FIG. 6 is a close-up view of a part of the battery cell 20 shown in FIG. 4. The electrode terminal 24 includes a terminal body 245 and a limiting structure. The first connecting portion 242 is formed on the terminal body 245. The limiting structure is disposed on the terminal body 245. The limiting structure is configured to limit movement of the terminal body 245 relative to the end cap 23 in the thickness direction Z of the end cap 23.

The terminal body 245 is a body part of the electrode terminal 24. The first connecting portion 242 is a part of the terminal body 245. The terminal body 245 may be cuboidal, cylindrical, or in other shapes. The limiting structure is a part of the electrode terminal 24, and the part coordinates with the end cap 23 to restrict the terminal body 245 from moving along the thickness direction Z of the end cap 23.

The limiting structure serves to limit the position of the terminal body 245, and restricts the movement of the terminal body 245 relative to the end cap 23 in the thickness direction Z of the end cap 23, thereby improving the firmness of the connection between the electrode terminal 24 and the end cap 23, ensuring stability of the electrical connection between the first connecting portion 242 and the tab, and reducing the risk of failure of electrical connection between the first connecting portion 242 and the second tab 223 caused by the movement of the electrode terminal 24 relative to the end cap 23.

In some embodiments, the limiting structure includes a first limiting portion 246 and a second limiting portion 247. Both the first limiting portion 246 and the second limiting portion 247 protrude from an outer peripheral surface of the terminal body 245. The end cap 23 includes a stop portion 232. Athrough-hole is created on the stop portion 232. The terminal body 245 is passed through and disposed in the through-hole. In the thickness direction Z of the end cap 23, the first limiting portion 246 and the second limiting portion 247 are located on two sides of the stop portion 232 respectively to limit movement of the terminal body 245 relative to the stop portion 232 in the thickness direction Z.

The first limiting portion 246 and the second limiting portion 247 each are a part of the electrode terminal 24, and the part coordinates with the end cap 23 to limit movement of the terminal body 245. The stop portion 232 is a part of the end cap 23, and the part is located between the first limiting portion 246 and the second limiting portion 247 in the thickness direction Z. In an example, the first limiting portion 246 is located on a side of the stop portion 232, the side being away from the body portion 221; and the second limiting portion 247 is located on a side of the stop portion 232, the side being oriented toward the body portion 221. In the thickness direction Z of the end cap 23, the first limiting portion 246 is configured to restrict the terminal body 245 from moving toward the body portion 221 relative to the stop portion 232. The second limiting portion 247 is configured to restrict the terminal body 245 from moving away from the body portion 221 relative to the stop portion 232. Both the first limiting portion 246 and the second limiting portion 247 may directly abut against the stop portion 232, or indirectly abut against the stop portion 232 through an intermediate piece, so as to restrict the terminal body 245 from moving relative to the stop portion 232 in the thickness direction Z.

The first limiting portion 246, the terminal body 245, and the second limiting portion 247 jointly define a limiting groove. The stop portion 232 is snap-fitted in the limiting groove to limit movement of the electrode terminal 24. Using an example in which the terminal body 245 is cylindrical, the first limiting portion 246 and the second limiting portion 247 may assume a ring structure that extends along the circumferential direction of the terminal body 245. The first limiting portion 246, the terminal body 245, and the second limiting portion 247 jointly define an annular limiting groove.

The first limiting portion 246 and the terminal body 245 may be a structure formed in one piece, or a structure formed separately and then connected together. The second limiting portion 247 and the terminal body 245 may be a structure formed in one piece, or a structure formed separately and then connected together. Depending on the structure of the electrode terminal 24, the electrode terminal 24 may be mounted onto the end cap 23 in different manners. For example, the first limiting portion 246 and the terminal body 245 are formed separately, and the second limiting portion 247 and the terminal body 245 are formed in one piece. During mounting of the electrode terminal 24, the terminal body 245 may be passed into the through-hole of the stop portion 232 first, and then the second limiting portion 247 is connected (for example, welded) to the terminal body 245, so that the electrode terminal 24 is mounted on the end cap 23. For another example, both the first limiting portion 246 and the second limiting portion 247 are formed together with the terminal body 245 in one piece, and in this case, the electrode terminal 24 may be mounted onto the end cap 23 by riveting.

The outer peripheral surface of the terminal body 245 means an outer surface of the terminal body 245, and the outer surface is parallel to the thickness direction Z of the end cap 23. Using a cylindrical terminal body 245 as an example, the outer peripheral surface of the terminal body 245 is a cylindrical outer surface of the terminal body 245.

In this embodiment, the terminal body 245 is passed through and disposed in the through-hole of the stop portion 232. The first limiting portion 246 and the second limiting portion 247 are located on two sides of the stop portion 232 respectively, thereby not only restricting the movement of the terminal body 245 in the axial direction (the thickness direction Z of the end cap 23), but also restricting the movement of the terminal body 245 in the radial direction, and in turn, implementing the position limitation for the electrode terminal 24, and ensuring the stability of the electrical connection between the first connecting portion 242 of the electrode terminal 24 and the tab.

It is hereby noted that, in this embodiment of this application, the limiting structure in the electrode terminal 24 is not limited to the above structure. For example, the limiting structure includes a protruding portion that protrudes from the outer peripheral surface of the terminal body 245. The protruding portion is snap-fitted to a snap slot on a wall of the through-hole on the stop portion 232, so as to restrict the terminal body 245 from moving along the thickness direction Z of the end cap 23.

In some embodiments, still referring to FIG. 6, the battery cell 20 may further include an insulator 25. At least a part of the insulator 25 is located between the first tab 222 and the second tab 223 to isolate the first tab 222 from the second tab 223.

The insulator 25 is a component that isolates the first tab 222 from the second tab 223. The first tab 222 is dielectrically isolated from the second tab 223 by the insulator 25. The insulator 25 may be made of various materials such as rubber and plastic. At least a part of the insulator 25 is located between the first tab 222 and the second tab 223. Understandably, the insulator 25 may be fully located between the first tab 222 and the second tab 223, or the insulator 25 may be partly located between the first tab 222 and the second tab 223.

In this embodiment, at least a part of the insulator 25 is located between the first tab 222 and the second tab 223. The insulator 25 serves to isolate the first tab 222 from the second tab 223, thereby reducing the risk of a short circuit caused by the contact between the first tab 222 and the second tab 223. The insulator 25 can also reduce the movement space of the body portion 221 in the housing 21, and reduce the risk of failure of the electrical connection between the end cap 23 and the first tab 222 as well as the electrical connection between the first connecting portion 242 and the second tab 223.

In some embodiments, still referring to FIG. 6, the insulator 25 includes a first insulating portion 251 and a second insulating portion 252. A least a part of the first insulating portion 251 is located between the first tab 222 and the second tab 223 to isolate the first tab 222 from the second tab 223. At least a part of the second insulating portion 252 is located between the electrode terminal 24 and the end cap 23 to isolate the electrode terminal 24 from the end cap 23 and implement insulated connection between the electrode terminal 24 and the end cap 23.

The first insulating portion 251 is a part of the insulator 25, and the part isolates the first tab 222 from the second tab 223. The first tab 222 is dielectrically isolated from the first tab 222 by the first insulating portion 251. The second insulating portion 252 is a part of the insulator 25, and the part isolates the electrode terminal 24 from the end cap 23. The electrode terminal 24 is dielectrically connected to the end cap 23 by the second insulating portion. The first insulating portion 251 and the second insulating portion 252 may be independent of each other, without being connected in any manner. Alternatively, the first insulating portion and the second insulating portion may be connected together to form a whole. As an example, the second insulating portion 252 is configured to seal the electrode terminal 24 and the end cap 23. The second insulating portion 252 implements both insulated connection between the electrode terminal 24 and the end cap 23 and hermetic connection between the electrode terminal 24 and the end cap 23.

Both the first insulating portion 251 and the second insulating portion 252 may be a ring structure that extends along the circumferential direction of the electrode terminal 24, so that the insulator 25 is disposed around the electrode terminal 24. When the first insulating portion 251 and the second insulating portion 252 are connected to each other, the insulator 25 can also isolate the second tab 223 from the end cap 23, and reduce the risk of a short circuit between a positive electrode and a negative electrode caused by the contact between the second tab 223 and the end cap 23.

Using an example in which the limiting structure of the electrode terminal 24 includes a first limiting portion 246 and a second limiting portion 247, the second insulating portion 252 may be folded around the stop portion 232 of the end cap 23. The stop portion 232 effectively exerts a good position-limiting effect on the second insulating portion 252 to restrict the second insulating portion 252 from moving in the thickness direction Z of the end cap 23. For example, in FIG. 6, in the thickness direction Z of the end cap 23, a part of the second insulating portion 252 is located between the first limiting portion 246 and the stop portion 232. In the thickness direction Z of the end cap 23, a part of the second insulating portion 252 is located between the second limiting portion 247 and the stop portion 232. Apart of the insulator 25 is located between a wall face of the through-hole on the stop portion 232 and the outer peripheral surface of the terminal body 245 so as to implement good insulation and airtightness between the electrode terminal 24 and the end cap 23. In addition, as an example, in the thickness direction Z of the end cap 23, the second limiting portion 247 is closer to the body portion 221 than the first limiting portion 246. Another part of the second insulating portion 252 coats the outer peripheral surface of the first limiting portion 246, thereby further improving the performance of insulation between the electrode terminal 24 and the end cap 23.

In this embodiment, the first insulating portion 251 of the insulator 25 serves to isolate the first tab 222 from the second tab 223, and the second insulating portion 252 of the insulator 25 serves to isolate the electrode terminal 24 from the end cap 23. In other words, the insulator 25 not only serves to isolate the first tab 222 from the second tab 223, but also serves to isolate the electrode terminal 24 from the end cap 23. The insulator 25 implements the insulation between the electrode terminal 24 and the end cap 23 when implementing the insulation between the first tab 222 and the second tab 223.

In some embodiments, the first insulating portion 251 and the second insulating portion 252 are a structure formed in one piece. Understandably, the first insulating portion 251 and the second insulating portion 252 are formed together in one piece, for example, by casting.

In this embodiment, the insulator 25 is highly integrated and easy to and mount. Because the electrode terminal 24 is dielectrically connected to the end cap 23 by the second insulating portion 252, when the position of the second insulating portion 252 is limited by both the electrode terminal 24 and the end cap 23, the first insulating portion 251 is not prone to be displaced in the housing 21. In this way, the first insulating portion 251 is always in the position for isolating the first tab 222 from the second tab 223.

In some embodiments, still referring to FIG. 6, in the thickness direction Z of the end cap 23, the first insulating portion 251 abuts against the end cap 23 and the body portion 221.

The first insulating portion 251 abuts against the end cap 23 and the body portion 221 so that the first insulating portion 251 contacts both the end cap 23 and the body portion 221. In this way, the first insulating portion 251 is supported between the end cap 23 and the body portion 221 in the thickness direction Z of the end cap 23.

As an example, the first insulating portion 251 includes a first face 2511 and a second face 2512 opposite to each other in the thickness direction Z of the end cap 23. The first face 2511 and the second face 2512 abut against the end cap 23 and the body portion 221 respectively.

In this embodiment, the first insulating portion 251 not only isolates the first tab 222 from the second tab 223, but also properly limits the position of the body portion 221 to restrict the body portion 221 from moving in the housing 21 along the thickness direction Z of the end cap 23. This further reduces the risk of failure of the electrical connection between the end cap 23 and the first tab 222 as well as the electrical connection between the first connecting portion 242 and the second tab 223.

In some embodiments, the first tab 222 is located on an outer peripheral side of the second tab 223, and an inner peripheral surface of the first tab 222 is in clearance fit with an outer peripheral surface of the second tab 223.

That the first tab 222 is located on the outer peripheral side of the second tab 223 means that, in a direction perpendicular to the thickness direction Z of the end cap 23, the first tab 222 is closer to a sidewall of the housing 21 than the second tab 223 (shown in FIG. 5). The sidewall of the housing 21 means a wall of the housing 21, and the wall is parallel to the thickness direction Z of the end cap 23. The inner peripheral surface of the first tab 222 means an inner side of the first tab 222, and the inner side is parallel to the thickness direction Z of the end cap 23. The outer peripheral surface of the second tab 223 means an outer side of the second tab 223, and the outer side is parallel to the thickness direction Z of the end cap 23. That the inner peripheral surface of the first tab 222 is in clearance fit with the outer peripheral surface of the second tab 223 means that a clearance exists between the inner peripheral surface of the first tab 222 and the outer peripheral surface of the second tab 223. In an embodiment in which the first tab 222 is dielectrically isolated from the second tab 223 by the insulator 25, at least a part of the insulator 25 is located in the clearance between the first tab 222 and the second tab 223 to isolate the first tab 222 from the second tab 223. For example, the first insulating portion 251 of the insulator 25 is partly arranged between the first tab 222 and the second tab 223.

The first tab 222 and the second tab 223 each assume a closed structure that contains two ends connected to each other and that extends along the circumferential direction of the electrode terminal 24, for example, may be a ring structure or a square structure.

The first tab 222 is located on the outer peripheral side of the second tab 223. The first tab 222 is connected to the end cap 23. The first connecting portion 242 of the electrode terminal 24 is connected to the second tab 223. Therefore, the electrode terminal 24 can be mounted in a middle position of the end cap 23, thereby facilitating the connection between the electrode terminal 24 and an external component (such as a busbar component).

In some embodiments, the first tab 222 and/or the second tab 223 assume a ring structure.

When both the first tab 222 and the second tab 223 assume a ring structure, the first tab 222 may be coaxial with the second tab 223. If the first tab 222 is located on the outer peripheral side of the second tab 223, then the first tab 222 forms an outer ring tab, and the second tab 223 forms an inner ring tab.

The first tab 222 assumes a ring structure, thereby facilitating formation of the first tab 222 and implementation of a large-area flow of current between the first tab 222 and the end cap 23. The second tab 223 assumes a ring structure, thereby facilitating formation of the second tab 223 and implementation of a large-area flow of current between the second tab 223 and the electrode terminal 24.

In some embodiments, still referring to FIG. 6, a second recess 233 is created on the end cap 23. The second recess 233 is recessed toward the body portion 221 from a side of the end cap 23, the side being away from the body portion 221. The end cap 23 includes a second connecting portion 234. In the thickness direction Z of the end cap 23, the second connecting portion 234 is located between the second recess 233 and the first tab 222. The second connecting portion 234 is configured to be connected to the first tab 222.

The second recess 233 on the end cap 23 may be a groove that is recessed toward the body portion 221 from an end of the end cap 23, the end being away from the body portion 221. A depth direction of the second recess 233 is consistent with the thickness direction Z of the end cap 23. The second recess 233 on the end cap 23 may be one in number. For example, the second recess 233 is an annular groove arranged around the electrode terminal 24. The second recess 233 on the end cap 23 may be plural in number. For example, a plurality of second recesses 233 are spaced out along the circumferential direction of the electrode terminal 24.

The second connecting portion 234 is a part that connects the end cap 23 and the first tab 222. Apart of the end cap 23, located at the bottom of the second recess 233, is the second connecting portion 234. In other words, after the second recess 233 is created on the end cap 23, a remaining part other than the position occupied by the second recess 233 on the end cap 23 is the second connecting portion 234.

The end cap 23 is located between the second recess 233 and the first tab 222 to form a second connecting portion 234 connected to the first tab 222. A part of the end cap 23, located at the bottom of the second recess 233, is the second connecting portion 234. Through the second recess 233, the connection region between the end cap 23 and the first tab 222 can be determined, thereby making it convenient to connect the end cap 23 to the first tab 222 accurately.

In some embodiments, the first connecting portion 242 is welded to the second tab 223; and/or the end cap 23 is welded to the first tab 222.

The first connecting portion 242 may be welded to the second tab 223 by penetration welding, and the end cap 23 may also be welded to the first tab 222 by penetration welding.

The first connecting portion 242 is welded to the second tab 223, thereby implementing a stable connection between the electrode terminal 24 and the first tab 222 and ensuring a stable flow of current between the electrode terminal 24 and the second tab 223. At the same time, the direct connection between the electrode terminal 24 and the second tab 223 is implemented. The electrical connection between the electrode terminal 24 and the second tab 223 can be implemented without requiring a current collection component, thereby vacating more space for the body portion 221.

Because the electrode terminal 24 includes the first recess 241, the first connecting portion 242 of the electrode terminal 24, which is configured to be welded to the second tab 223, is thinner than the remaining part of the electrode terminal 24, thereby facilitating the penetration welding by which the first connecting portion 242 is welded to the second tab 223, and in turn, ensuring the firmness of the electrode terminal 24 and the second tab 223 that are welded together. In addition, a weld mark formed by welding the first connecting portion 242 to the second tab 223 protrudes beyond the first connecting portion 242 by a margin, and the margin can be accommodated in the first recess 241, thereby preventing the weld mark from affecting the connection between the electrode terminal 24 and an external component (such as a busbar component).

The end cap 23 is welded to the first tab 222, thereby implementing a stable connection between the end cap 23 and the first tab 222 and ensuring a stable flow of current between the end cap 23 and the first tab 222. At the same time, the direct connection between the end cap 23 and the first tab 222 is implemented. The electrical connection between the end cap 23 and the first tab 222 can be implemented without requiring a current collection component, thereby vacating more space for the body portion 221.

In an embodiment in which the end cap 23 includes a second recess 233, the second connecting portion 234 of the end cap 23, which is configured to be welded to the first tab 222, is thinner than the remaining part of the end cap 23, thereby facilitating the penetration welding by which the second connecting portion 234 is welded to the first tab 222, and in turn, ensuring the firmness of the end cap 23 and the first tab 222 that are welded together. In addition, a weld mark formed by welding the second connecting portion 234 to the first tab 222 protrudes beyond the second connecting portion 234 by a margin, and the margin can be accommodated in the first recess 241, thereby preventing the weld mark from affecting the connection between the end cap 23 and an external component (such as a busbar component).

An embodiment of this application provides a battery 100, including a box 10 and the battery cell 20 according to any embodiment described above. The box 10 is configured to accommodate the battery cell 20.

An embodiment of this application provides an electrical device, including the battery 100 according to any embodiment described above.

The electrical device may be any one of the foregoing devices in which the battery 100 is applied.

In addition, referring to FIG. 5, an embodiment of this application provides a cylindrical battery, including a housing 21, an electrode assembly 22, an end cap 23, an electrode terminal 24, and an insulator 25. The end cap 23 is welded to a first tab 222 of the electrode assembly 22 to implement electrical connection between the end cap 23 and the first tab 222. A first connecting portion 242 of the electrode terminal 24 is welded to a second tab 223 to implement electrical connection between the electrode terminal 24 and the second tab 223. The insulator 25 includes a first insulating portion 251 and a second insulating portion 252. A least a part of the first insulating portion 251 is located between the first tab 222 and the second tab 223 to isolate the first tab 222 from the second tab 223 and implement insulation between the first tab 222 and the second tab 223. The second insulating portion 252 is connected to the first insulating portion 251. At least a part of the second insulating portion 252 is located between the electrode terminal 24 and the end cap 23 to isolate the electrode terminal 24 from the end cap 23 and implement insulated connection between the electrode terminal 24 and the end cap 23.

In such a cylindrical battery, the tabs are lead out from the same side, thereby saving space inside the battery cell 20. In this way, the housing 21 can provide more space for the body portion 221, thereby increasing the energy density of the cylindrical battery. The insulator 25 not only implements the insulated connection between the electrode terminal 24 and the end cap 23, but also implements the insulation between the first tab 222 and the second tab 223, thereby reducing the risk of a short circuit between a positive electrode and a negative electrode of the cylindrical battery.

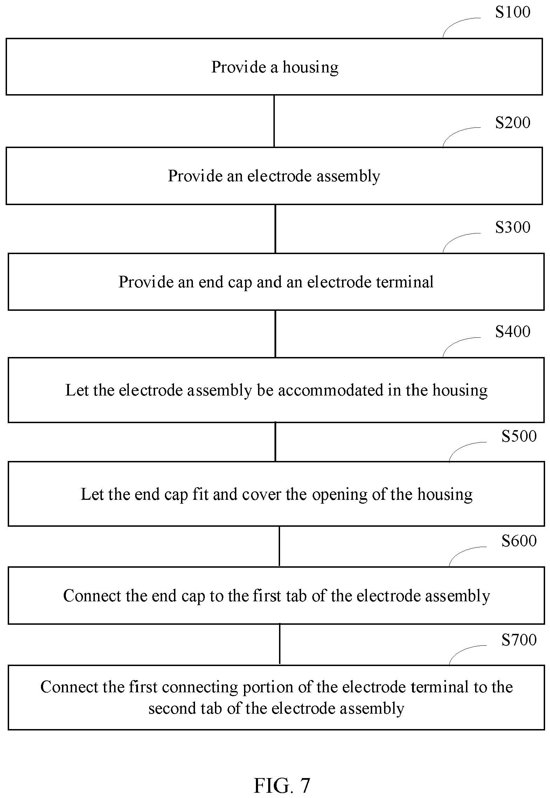

Referring to FIG. 7, FIG. 7 is a flowchart of a method for manufacturing a battery cell 20 according to some embodiments of this application. An embodiment of this application provides a method for manufacturing a battery cell 20. The manufacturing method includes the following steps:

S100: Providing a housing 21, where an opening is created on the housing 21;

S200: Providing an electrode assembly 22, where the electrode assembly 22 includes a body portion 221, a first tab 222, and a second tab 223; and the first tab 222 and the second tab 223 are of opposite polarities and located on the same side of the body portion 221;

S300: Providing an end cap 23 and an electrode terminal 24, where the electrode terminal 24 is dielectrically connected to the end cap 23, the electrode terminal 24 includes a first recess 241, and the electrode terminal 24 includes a first connecting portion 242;

S400: Letting the electrode assembly 22 be accommodated in the housing 21;

S500: Letting the end cap 23 fit and cover the opening of the housing 21, so that the first recess 241 is recessed toward the body portion 221 from a side of the electrode terminal 24, the side being away from the body portion 221; and so that the first connecting portion 242 is located between the first recess 241 and the second tab 223;

S600: Connecting the end cap 23 to the first tab 222 of the electrode assembly 22 to implement electrical connection between the end cap 23 and the first tab 222; and

S700: Connecting the first connecting portion 242 of the electrode terminal 24 to the second tab 223 of the electrode assembly 22 to implement electrical connection between the electrode terminal 24 and the second tab 223.

In the above method, the order between step S100, step S200, and step S300 is not limited. For example, step S300 may be performed first, step S200 may be performed next, and then step S 100 is performed.

In the above method, the order between step S600 and step S700 is not limited. For example, step S700 may be performed first, and then step S600 is performed. In other words, the end cap 23 may be connected to the first tab 222 first, and then the first connecting portion 242 is connected to the second tab 223; or, the first connecting portion 242 may be connected to the second tab 223 first, and then the end cap 23 is connected to the first tab 222.

It is hereby noted that, for the related structure of the battery cell 20 manufactured by the manufacturing method according to each of the foregoing embodiments, reference may be made to the description of the battery cell 20 provided in each of the foregoing embodiments, details of which are omitted herein.

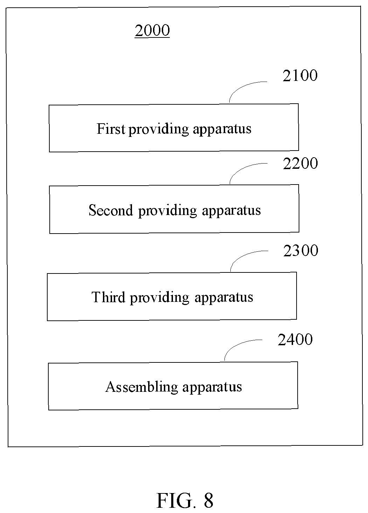

Referring to FIG. 8, FIG. 8 is a schematic structural diagram of equipment 2000 for manufacturing a battery cell 20 according to some embodiments of this application. An embodiment of this application further provides a piece of equipment 2000 for manufacturing a battery cell 20. The manufacturing equipment 2000 includes a first providing apparatus 2100, a second providing apparatus 2200, a third providing apparatus 2300, and an assembling apparatus 2400.

The first providing apparatus 2100 is configured to provide a housing 21. An opening is created on the housing 21. The second providing apparatus 2200 is configured to provide an electrode assembly 22. The electrode assembly 22 includes a body portion 221, a first tab 222, and a second tab 223. The first tab 222 and the second tab 223 are of opposite polarities and located on the same side of the body portion 221. The third providing apparatus 2300 is configured to provide an end cap 23 and an electrode terminal 24. The electrode terminal 24 is dielectrically connected to the end cap 23. The electrode terminal 24 includes a first recess 241. The electrode terminal 24 includes a first connecting portion 242. The assembling apparatus 2400 is configured to: let the electrode assembly 22 be accommodated in the housing 21; let the end cap 23 fit and cover the opening, so that the first recess 241 is recessed toward the body portion 221 from a side of the electrode terminal 24, the side being away from the body portion 221; and so that the first connecting portion 242 is located between the first recess 241 and the second tab 223; connect the end cap 23 to the first tab 222 to implement electrical connection between the end cap 23 and the first tab 222; and connect the first connecting portion 242 to the second tab 223 to implement electrical connection between the electrode terminal 24 and the second tab 223.

It is hereby noted that, for the related structure of the battery cell 20 manufactured by the manufacturing equipment 2000 provided in the foregoing embodiment, reference may be made to the description of the battery cell 20 provided in each preceding embodiment, details of which are omitted herein.

It is hereby noted that to the extent that no conflict occurs, the embodiments of this application and the features in the embodiments may be combined with each other.

The foregoing embodiments are just intended to describe the technical solutions of this application, but not to limit this application. To a person skilled in the art, various modifications and variations may be made to this application. Any and all modifications, equivalent replacements, improvements, and the like made without departing from the spirit and principles of this application still fall within the protection scope of this application.

## Claims

1. A battery cell, comprising:
a housing, on which an opening is created;
an electrode assembly, accommodated in the housing, wherein the electrode assembly comprises a body portion, a first tab, and a second tab; and the first tab and the second tab are of opposite polarities and located on a same side of the body portion;
an end cap, configured to fit and cover the opening and be electrically connected to the first tab; and
an electrode terminal, dielectrically connected to the end cap, wherein the electrode terminal comprises a first recess; the first recess is recessed toward the body portion from a side of the electrode terminal, the side being away from the body portion; the electrode terminal comprises a first connecting portion; in a thickness direction of the end cap, the first connecting portion is located between the first recess and the second tab; and the first connecting portion is configured to be connected to the second tab to implement electrical connection between the electrode terminal and the second tab.

2. The battery cell according to claim 1, wherein the electrode terminal comprises an abutment face oriented toward the body portion in the thickness direction, the abutment face is configured to abut against the second tab, and the electrode terminal forms the first connecting portion between a bottom face of the first recess and the abutment face.

3. The battery cell according to claim 2, wherein the end cap comprises an inner surface oriented toward the body portion in the thickness direction, and the abutment face is flush with the inner surface.

4. The battery cell according to any one of claims 1 to 3, wherein an injection port is created on the first connecting portion, and the injection port communicates with the first recess and an interior of the housing.

5. The battery cell according to any one of claims 1 to 4, wherein the electrode terminal comprises:
a terminal body, wherein the first connecting portion is formed on the terminal body;
a limiting structure, disposed on the terminal body, and configured to limit movement of the terminal body relative to the end cap in the thickness direction.

6. The battery cell according to claim 5, wherein the limiting structure comprises a first limiting portion and a second limiting portion, and both the first limiting portion and the second limiting portion protrude from an outer peripheral surface of the terminal body; and
the end cap comprises a stop portion; a through-hole is created on the stop portion; the terminal body is passed through and disposed in the through-hole; and, in the thickness direction, the first limiting portion and the second limiting portion are located on two sides of the stop portion respectively to limit movement of the terminal body relative to the stop portion in the thickness direction.

7. The battery cell according to claim 1, wherein the battery cell further comprises:
an insulator, wherein at least a part of the insulator is located between the first tab and the second tab to isolate the first tab from the second tab.

8. The battery cell according to claim 7, wherein the insulator comprises:
a first insulating portion, wherein at least a part of the first insulating portion is located between the first tab and the second tab to isolate the first tab from the second tab;
a second insulating portion, wherein at least a part of the second insulating portion is located between the electrode terminal and the end cap to isolate the electrode terminal from the end cap and implement insulated connection between the electrode terminal and the end cap.

9. The battery cell according to claim 8, wherein the first insulating portion and the second insulating portion are a structure formed in one piece.

10. The battery cell according to claim 8 or 9, wherein, in the thickness direction, the first insulating portion abuts against the end cap and the body portion.

11. The battery cell according to any one of claims 1 to 10, wherein the first tab is located on an outer peripheral side of the second tab, and an inner peripheral surface of the first tab is in clearance fit with an outer peripheral surface of the second tab.

12. The battery cell according to any one of claims 1 to 11, wherein the first tab and/or the second tab assume a ring structure.

13. The battery cell according to any one of claims 1 to 12, wherein the end cap comprises a second recess, and the second recess is recessed toward the body portion from a side of the end cap, the side being away from the body portion; and
the end cap comprises a second connecting portion, and, in the thickness direction of the end cap, the second connecting portion is located between the second recess and the first tab, and the second connecting portion is configured to be connected to the first tab.

14. The battery cell according to any one of claims 1 to 13, wherein the first connecting portion is welded to the second tab; and/or the electrode terminal is welded to the first tab.

15. A battery, comprising:
the battery cell according to any one of claims 1 to 14; and
a box, configured to accommodate the battery cell.

16. An electrical device, comprising the battery according to claim 15.

17. A method for manufacturing a battery cell, comprising:
providing a housing, wherein an opening is created on the housing;
providing an electrode assembly, wherein the electrode assembly comprises a body portion, a first tab, and a second tab; and the first tab and the second tab are of opposite polarities and located on a same side of the body portion;
providing an end cap and an electrode terminal, wherein the electrode terminal is dielectrically connected to the end cap, the electrode terminal comprises a first recess, and the electrode terminal comprises a first connecting portion;
letting the electrode assembly be accommodated in the housing;
letting the end cap fit and cover the opening, so that the first recess is recessed toward the body portion from a side of the electrode terminal, the side being away from the body portion; and so that the first connecting portion is located between the first recess and the second tab;
connecting the end cap to the first tab to implement electrical connection between the end cap and the first tab; and
connecting the first connecting portion to the second tab to implement electrical connection between the electrode terminal and the second tab.

18. A piece of equipment for manufacturing a battery cell, wherein the manufacturing equipment comprises:
a first providing apparatus, configured to provide a housing, wherein an opening is created on the housing;
a second providing apparatus, configured to provide an electrode assembly, wherein the electrode assembly comprises a body portion, a first tab, and a second tab; and the first tab and the second tab are of opposite polarities and located on a same side of the body portion;
a third providing apparatus, configured to provide an end cap and an electrode terminal, wherein the electrode terminal is dielectrically connected to the end cap, the electrode terminal comprises a first recess, and the electrode terminal comprises a first connecting portion; and
an assembling apparatus, configured to: let the electrode assembly be accommodated in the housing; let the end cap fit and cover the opening, so that the first recess is recessed toward the body portion from a side of the electrode terminal, the side being away from the body portion; and so that the first connecting portion is located between the first recess and the second tab; connect the end cap to the first tab to implement electrical connection between the end cap and the first tab; and connect the first connecting portion to the second tab to implement electrical connection between the electrode terminal and the second tab.
